# DEMANDE DE BREVET EUROPEEN

(11) **EP 2 230 126 A2**
(43) Date de publication de la demande: **22.09.2010**
(21) Numéro de dépôt: 10156642.0
(22) Date de dépôt: 16.03.2010
(51) Int. Cl.: B60N 2/70

(54) **Siège de véhicule avec coussins gonflables**

(30) Priorité: 16.03.2009 FR 0951630
(71) Demandeur: Peugeot Citroën Automobiles SA, 78140 Vélizy-Villacoublay (FR)
(72) Inventeur: Bauvineau, Laurent, 92160 Antony (FR)

(57) **Abrégé**

L'invention a trait à un siège pour véhicule comprenant une série de coussins gonflables (4, 5, 6, 7, 8, 9) disposés côte à côte sur les surfaces utiles des structures (10, 11) du dossier (2) et de l'assise (3). Un ou plusieurs éléments en mousse (12) sont disposés sur ces coussins de sorte à former une couche les recouvrant. Ces différents coussins gonflables sont reliés d'un point de vue pneumatique à un compresseur à air via un dispositif de contrôle et de régulation de la pression individuelle dans chaque coussin. Un tel agencement permet d'assurer différentes fonctions à vocation de confort comme le modelage du siège en fonction des désirs du passager et de sa morphologie, le massage du passager dans certaines zones déterminées, le maintien actif latéral pour compenser la force centrifuge dans les virages, un effet anti sous-marinage en cas de choc et la détection et classification du passager pour les systèmes de sécurité passive comme les airbags.

## Description

La présente invention a trait à un siège, plus particulièrement à un siège de véhicule, encore plus particulièrement à un siège de véhicule comportant des coussins gonflables au niveau de la surface utile de l'assise et/ou du dossier.

Des sièges de véhicule comprenant des coussins ou poches gonflables disposés sur l'assise et sur le dossier sont connus. Ces coussins ont généralement pour objectif d'assurer un certain confort pour les passagers et/ou de modeler la forme du siège, toujours dans un objectif de confort.

Le document US 4,965,899 décrit un siège de véhicule comprenant une structure métallique avec une assise et un dossier articulés l'un par rapport à l'autre. Il décrit différentes formes de coussins gonflables destinés à être placés dans les éléments de mousse du siège en vue de couvrir certaines parties de l'assise et du dossier. Ces éléments sont noyés dans la mousse lors de la fabrication de ces éléments. Les différents coussins sont gonflables séparément au moyen d'une pompe. Les coussins gonflables permettent de modeler la surface extérieure de l'assise et du dossier. Ils permettent d'augmenter à certains endroits l'épaisseur des éléments en mousse. Cette construction est cependant limitée à certaines zones de l'assise et du dossier comme par exemple la zone de soutien lombaire au niveau du dossier ou encore des zones de maintien latéral au niveau de l'assise et du dossier. Les coussins gonflables y sont de taille assez importante au niveau de leurs surfaces de contact avec le passager si bien que les fonctionnalités de confort sont limitées à ces zones et sont donc assez réduites dans leur ensemble. De plus, les coussins gonflables viennent en sus des éléments en mousse si bien qu'ils augmentent l'épaisseur de l'assise et du dossier du siège.

Le document US 4,078,842 divulgue un siège de véhicule comprenant une structure rigide avec une assise et un dossier, ces derniers étant recouverts d'une série de coussins gonflables reliés entre eux formant un matelas pneumatique s'étendant depuis le haut du dossier jusqu'au à face avant de l'assise. Ce matelas est prévu pour des raisons de confort et assure la fonction de la mousse de siège conventionnel. Ce matelas gonflable est recouvert d'une housse en tissu à propriété élastique. Aucune mousse n'est prévue dans ce siège, les coussins gonflables assurant pleinement la fonction de déformabilité du siège pour le confort du passager. Le matelas est composé préférentiellement de cinq coussins gonflables reliés entre eux côte à côte en série, chaque coussin s'étendant sur la largeur du siège. L'utilisation de coussins gonflables en lieu et place d'éléments en mousse a pour seul objectif le confort des passagers. Or la subdivision du matelas en coussins gonflables indépendamment se limite à créer des zones réparties longitudinalement. Les fonctions de confort du siège de cet enseignement apparaissent par conséquent assez limitées. L'apparence extérieure d'un tel siège n'est pas des meilleures car les différents coussins gonflables, même gonflés correctement, manquent de former une surface creusée et profilée comme un siège classique avec des éléments en mousse peut le faire. De plus, l'absence de mousse laisse penser que les coussins gonflables doivent être assez épais en vue d'assurer un confort minimum.

L'invention cherche à proposer un siège de véhicule palliant au moins un des inconvénients sus mentionnés, c'est-à-dire présentant d'avantage de fonctionnalités notamment dans le domaine du confort.

L'invention consiste en un siège de véhicule comprenant : une partie structurelle incluant une assise et un dossier ayant, chacun, une surface utile de soutien d'un passager assis sur le siège; une pluralité de coussins gonflables disposés sur l'assise et le dossier; une couche de mousse recouvrant au moins une partie des coussins de la pluralité de coussins gonflables; et où la surface utile de l'assise et/ou du dossier est essentiellement totalement recouverte des coussins de la pluralité de coussins gonflables.

Une telle construction présente l'avantage de réduire l'épaisseur nécessaire des éléments en mousse sur la totalité de la surface utile du dossier et/ou de l'assise et donc l'épaisseur totale du siège tout en pouvant assurer diverses fonctionnalités de confort comme un modelage du siège, un massage de certaines zones au niveau de l'assise et/ou du dossier, la détection et classification du passager assis sur le siège et/ou le maintien actif compensant la force centrifuge. L'aspect esthétique moulé est de plus conservé grâce à la couche de mousse.

Selon un aspect avantageux de l'invention, au moins deux coussins sont disposés transversalement côte à côte selon leurs bords transversaux sur la surface utile de l'assise.

Selon un aspect avantageux de l'invention, un coussin allongé est disposé le long de chaque côté latéral de la surface utile de l'assise.

Selon un aspect avantageux de l'invention, un coussin allongé est disposé transversalement à l'extrémité avant de la surface utile de l'assise couvrant toute la largeur ladite surface.

Selon un aspect avantageux de l'invention, le coussin allongé à l'extrémité avant de l'assise est dimensionné au niveau de sa forme et de sa résistance à pouvoir servir, en outre, d'airbag anti sous marinage.

Selon un aspect avantageux de l'invention, le bord avant du coussin allongé à l'extrémité avant de l'assise correspond essentiellement au profil avant de la surface utile de l'assise et le bord arrière dudit coussin est essentiellement droit.

Selon un aspect avantageux de l'invention, au moins deux coussins sont disposés transversalement côte à côte selon leurs bords transversaux sur la surface utile du dossier.

Selon un aspect avantageux de l'invention, un coussin allongé est disposé le long de chaque côté latéral de la surface utile du dossier.

Selon un aspect avantageux de l'invention, un coussin allongé est disposé transversalement à l'extrémité haute de la surface utile du dossier couvrant toute la largeur ladite surface.

Selon un aspect avantageux de l'invention, les coussins recouvrant les surfaces utiles de l'assise et/ou du dossier sont connectés à un dispositif de contrôle de la pression dans chaque coussin de sorte à pouvoir mettre en oeuvre au moins une des actions suivantes : détection de la présence d'un passager, classification du passager, massage du passager, soutient latéral actif en fonction de la force centrifuge, réglage de la dureté du siège, réglage de la hauteur de l'assise du siège, anti sous marinage.

Selon un aspect avantageux de l'invention, le siège comprend au moins un coussin le long de chaque bord latéral de la surface utile de l'assise et/ou du dossier afin d'assurer un soutien latéral.

Selon un aspect avantageux de l'invention, le siège comprend un dispositif apte à contrôler de manière active la pression dans le ou les coussin(s) de soutien latéral en fonction de la force centrifuge à laquelle le véhicule et le passager sont soumis.

Selon un aspect avantageux de l'invention, le dispositif de contrôle actif contrôle la pression dans le ou les coussin(s) de soutien latéral uniquement du côté du siège vers lequel la force centrifuge pousse le passager.

Selon un aspect avantageux de l'invention, l'assise et/ou le dossier comprend une structure gonflable distincte des coussins et pouvant être gonflée à plus haute pression en vue d'assurer sa rigidité en tant qu'élément structurel du siège.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
La figure 1 est une vue en perspective d'un siège de véhicule selon l'invention.
La figure 2 est une vue schématique d'une coupe selon un plan transversal d'un siège selon l'invention.
La figure 3 est une vue en plan du dossier du siège de la figure 1.
La figure 4 est une vue en élévation de l'assise du siège de la figure 1.

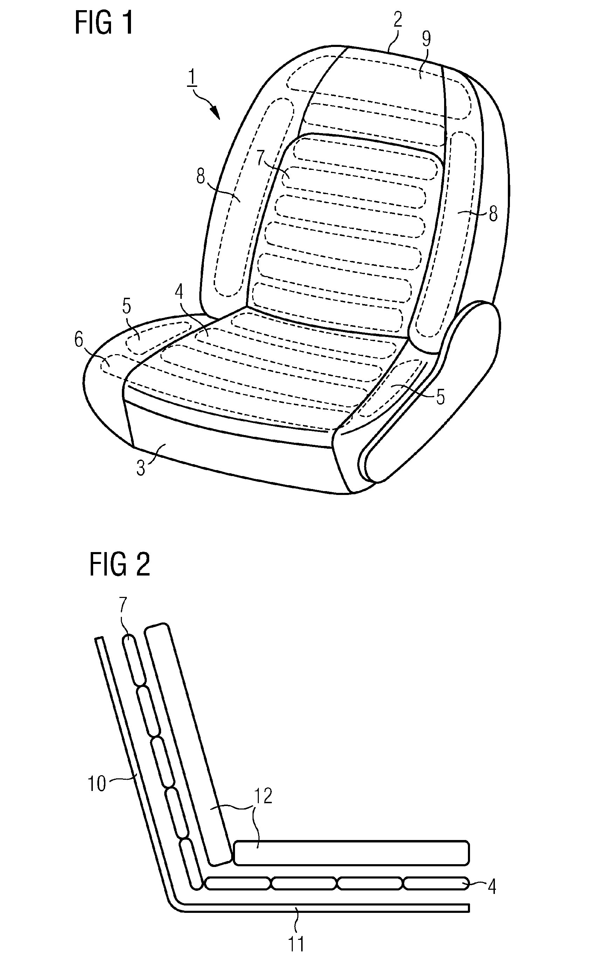

Le siège 1 représenté à la figure 1 comprend un dossier 2 et une assise 3, ces derniers étant articulés l'un par rapport à l'autre de manière usuelle. Le siège comprend une partie structurelle incluant, entre autres, une structure pour l'assise 3 et une structure pour le dossier 2. Ces parties structurelles sont illustrées à la figure 2 et référencée 10 et 11. Elles comprennent, chacune, une surface utile destinée à recevoir le rembourrage et l'habillage du siège, ces derniers étant destinés à recevoir le passager qui s'assoit sur le siège. Ces structures sont typiquement faites en tubes d'acier cintrés formant la périphérie et de tringles et ressorts tendus à partir du tube en acier. D'autres constructions des parties structurelles du siège sont envisageables. Elles sont représentées de manières très simplifiée par des éléments plans au niveau de la figure 2 pour des raisons de clarté d'exposé de l'invention.

Ces éléments structurels sont recouverts de coussins gonflables 4, 5, 6, 7, 8 et 9 qui eux-mêmes sont recouverts d'éléments en mousse 12. La partie centrale de la structure 11 de l'assise 3 est recouverte de trois coussins gonflables 4 disposées transversalement. Un quatrième coussin gonflable 6 est disposé transversalement au bord avant de l'assise formant ainsi le nez du siège. Chaque bord latéral de l'assise est recouvert d'un coussin allongé 5. La partie centrale de la structure 10 du dossier est recouverte de sept coussins disposés transversalement et parallèlement aux coussins 4. Un coussin supplémentaire 9 est disposé également transversalement sur le bord supérieur du dossier. Les bords latéraux du dossier sont garnis, chacun, d'un coussin allongé 8. Il s'agit donc d'une construction composite de l'habillage du siège qui permet de réduire l'épaisseur de la couche de mousse tout en assurant différentes fonctionnalités de confort pour le passager.

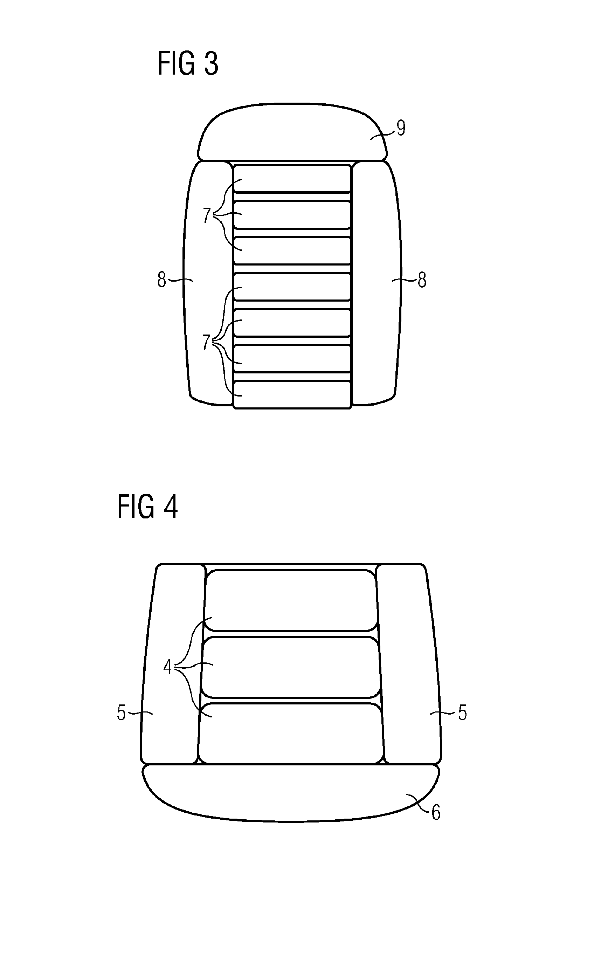

L'agencement des coussins du dossier est détaillé à la figure 3. Celle-ci montre une série de sept coussins transversaux répartis parallèlement les uns aux autres le long de la partie centrale du dossier. Ils servent à supporter la majeure partie du dos du passager du siège. Ces coussins ont leurs extrémités à proximité de deux coussins allongés 8 agencés le long des bords gauche et droite du dossier. Ces coussins allongés 8 et de plus gros diamètre que les coussins 7 servent de support latéral utile lorsque le conducteur est soumis à une force centrifuge durant la conduite. Ces coussins peuvent également servir à envelopper le passager une fois celui-ci assis sur le siège. Un coussin 9 s'étendant sur toute la largeur du dossier est agencé à proximité du bord supérieur du dossier. Il correspond aux épaules du passager.

La figure 4 montre pareillement à la figure 3 les détails d'agencement des coussins de l'assise du siège de la figure 1. La partie centrale est couverte par trois coussins disposés parallèlement les uns aux autres et transversalement à l'axe principal du siège. Un coussin allongé 5 et de plus gros diamètre est prévu à chaque bord gauche et droite de l'assise. Un coussin 6 couvrant toute la largeur de l'assise est disposé à l'avant de l'assise à proximité du bord, formant ainsi le nez du siège.

Une couche de mousse peut être prévue directement sur la surface extérieure des coussins dirigée vers l'extérieur afin d'obtenir un ressenti comparable à celui de sièges entièrement composé de mousse. L'ensemble des coussins sera recouvert d'une fine couche de mousse 12 et de la coiffe du siège.

Chaque coussin est relié à un dispositif de contrôle de la pression (non représenté) assurant un contrôle individuel de la pression dans chaque coussin. Ce dispositif peut être un groupe compresseur à air connecté à une vanne sélective commandée électriquement raccordant la pompe avec un coussin de manière sélective ou encore un groupe compresseur à air alimentant une série d'électrovannes, chacune de ces électrovannes étant raccordée à un coussin spécifique. Ces électrovannes peuvent être du type à trois positions, la première assurant le raccordement entre le compresseur et le coussin pour le gonflage, la deuxième isolant le coussin et la troisième raccordant le coussin avec l'ambiance pour le dégonflage. Ces vannes peuvent être du type progressif en vue d'assurer un contrôle fin des opérations de gonflage et de dégonflage. Un capteur de pression (non représenté) est en connexion pneumatique avec chacun des coussins, par exemple au niveau de la liaison avec l'électrovanne correspondante afin d'assurer une mesure permanente de la pression dans chaque coussin.

La pression dans chaque coussin peut être contrôlée et variée de manière à assurer différentes fonctions. Par exemple, une fonction de réglage de la hauteur du passager peut être au moins partiellement assurée par les coussins 4 de l'assise 3 en assurant une pression identique dans chaque coussin et contrôlée en fonction de la hauteur désirée. Un contrôle de la quantité d'air présent dans chaque coussin peut être avantageux dans ce contexte. Un contrôle combiné de la pression et du volume peut également être avantageux. Une fonction de massage peut être assurée par un processus de gonflage et dégonflage de certains coussins adjacents 4 et/ou 7 au niveau de l'assise et/ou du dossier. Le massage peut être localisé à une zone ou des zones bien précise(s) en sélectionnant les coussins y correspondant. Une fonction de maintien latéral actif peut être assurée par les coussins latéraux 5 et 8. En effet, ces coussins peuvent être soumis à un gonflage ou à une augmentation du gonflage lorsque le véhicule roule dans un virage, en particulier lorsque la force centrifuge exercée sur le passager dépasse un certain seuil. Une telle force centrifuge est typiquement mesurée dans le cadre des dispositifs de correction de trajectoire ou peut encore être mesurée directement par un ou des capteurs adéquats ou encore peut être calculée sur base de la vitesse du véhicule et l'angle de braquage. Le degré de gonflage des coussins latéraux peut être modulé en fonction de l'intensité de la force centrifuge à laquelle le passager est soumis. Une fonction de détection et de classification de passager peut également être assurée par les coussins de l'assise et éventuellement les coussins du dossier. En effet, le fait que la couche de mousse 12 sur laquelle un passager peut s'assoir soit entièrement soutenue par les coussins permet de mesurer ou à tout le moins d'évaluer le poids du passager sur base des valeurs des pressions mesurées dans les différents coussins. De plus, la taille du passager peut être évaluée sur base des valeurs des pressions mesurées dans les coussins 7 et 9 du dossier, plus particulièrement ceux du haut du dossier. Sur base des valeurs de pression dans les coussins, la présence d'un passager assis sur le siège peut ainsi être détectée et une classification peut être effectuée. De telles données sont utiles pour les dispositifs de sécurité passifs comme par exemple les airbags.

Le nombre de coussins et leurs répartitions peuvent être différents de l'exemple des figures 1 et 2. En effet, on pourrait imaginer un réseau présentant un plus grand nombre de coussins de sorte à réduire la taille de la zone d'influence de chaque coussin. Les coussins latéraux peuvent également être fractionnés en plusieurs parties, typiquement en deux ou trois parties.

La construction proposée permet une réduction de l'épaisseur de l'assise et/ou du dossier lorsque les chambres sont dégonflées. Ceci est avantageux pour le rangement de sièges destinés à être escamotés ou encore basculés en vue de moduler l'espace disponible. Ceci est d'autant plus avantageux pour des sièges dont la structure rigide est également gonflable dans le but de pouvoir être escamoté dans un espace de réduit, typiquement pour des sièges de la troisième rangée d'un véhicule à sept places. La rigidité de la structure, typiquement le dossier et éventuellement l'assise, est assurée par un gonflage sous une pression plus haute que la pression moyenne de travail des coussins de confort.

## Revendications

1. Siège de véhicule (1) comprenant :
une partie structurelle incluant une assise (11) et un dossier (10) ayant, chacun, une surface utile de soutien d'un passager assis sur le siège ;
une pluralité de coussins gonflables (4, 5, 6, 7, 8, 9) disposés sur l'assise (11) et
le dossier (10) ;
une couche de mousse (12) recouvrant au moins une partie des coussins (4, 5, 6, 7, 8, 9) de la pluralité de coussins gonflables ;
**caractérisé en ce que**
la surface utile de l'assise (11) et/ou du dossier (10) est essentiellement totalement recouverte de coussins (4, 5, 6, 7, 8, 9) de la pluralité de coussins gonflables.

2. Siège de véhicule selon la revendication précédente, **caractérisé en ce qu'**au moins deux coussins (4) sont disposés transversalement côte à côte selon leurs bords transversaux sur la surface utile de l'assise (11).

3. Siège de véhicule selon la revendication précédente, **caractérisé en ce qu'**un coussin allongé (5) est disposé le long de chaque côté latéral de la surface utile de l'assise (11).

4. Siège de véhicule selon l'une des revendications 2 et 3, **caractérisé en ce qu'**un coussin allongé (6) est disposé transversalement à l'extrémité avant de la surface utile de l'assise (11) couvrant toute la largeur ladite surface.

5. Siège de véhicule selon la revendication précédente, **caractérisé en ce que** le coussin allongé (6) à l'extrémité avant de l'assise est dimensionné au niveau de sa forme et de sa résistance à pouvoir servir, en outre, d'airbag anti sous marinage.

6. Siège de véhicule selon la revendication précédente, **caractérisé en ce que** le bord avant du coussin allongé (6) à l'extrémité avant de l'assise correspond essentiellement au profil avant de la surface utile de l'assise et le bord arrière dudit coussin est essentiellement droit.

7. Siège de véhicule selon l'une des revendications précédentes, **caractérisé en ce qu'**au moins deux coussins (7) sont disposés transversalement côte à côte selon leurs bords transversaux sur la surface utile du dossier (10).

8. Siège de véhicule selon la revendication précédente, **caractérisé en ce qu'**un coussin allongé (8) est disposé le long de chaque côté latéral de la surface utile du dossier (10).

9. Siège de véhicule selon l'une des revendications 5 et 6, **caractérisé en ce qu'**un coussin allongé (9) est disposé transversalement à l'extrémité haute de la surface utile du dossier (10) couvrant toute la largeur ladite surface.

10. Siège de véhicule selon l'une des revendications précédentes, **caractérisé en ce que** les coussins (4, 5, 6, 7, 8, 9) recouvrant les surfaces utiles de l'assise (11) et du dossier (10) sont connectés à un dispositif de contrôle de la pression dans chaque coussin de sorte à pouvoir mettre en oeuvre au moins une des actions suivantes : détection de la présence d'un passager, classification du passager, massage du passager, soutient latéral actif en fonction de la force centrifuge, réglage de la dureté du siège, réglage de la hauteur de l'assise du siège, anti sous marinage.

11. Siège de véhicule selon l'une des revendications précédentes, **caractérisé en ce qu'**il comprend au moins un coussin (5, 8) le long de chaque bord latéral de la surface utile de l'assise (11) et/ou du dossier (10) afin d'assurer un soutien latéral.

12. Siège de véhicule selon la revendication précédente, **caractérisé en ce qu'**il comprend un dispositif apte à contrôler de manière active la pression dans le ou les coussin(s) de soutien latéral (5, 8) en fonction de la force centrifuge à laquelle le véhicule et le passager sont soumis.

13. Siège de véhicule selon la revendication précédente, **caractérisé en ce que** le dispositif de contrôle actif contrôle la pression dans le ou les coussin(s) de soutien latéral (5, 8) uniquement du côté du siège vers lequel la force centrifuge pousse le passager.

14. Siège de véhicule selon l'une des revendications précédentes, **caractérisé en ce que** l'assise et/ou le dossier comprend une structure gonflable distincte des coussins (4, 5, 6, 7, 8, 9) et pouvant être gonflée à plus haute pression en vue d'assurer sa rigidité en tant qu'élément structurel du siège.
